# EUROPÄISCHE PATENTSCHRIFT

(11) **EP 2 938 220 B1**
(45) Veröffentlichungstag und Bekanntmachung des Hinweises auf die Patenterteilung: **15.02.2017**
(21) Anmeldenummer: 13783236.6
(22) Anmeldetag: 10.09.2013
(51) Int. Cl.: A43D 3/02, A43D 1/02

(54) **VERFAHREN ZUR HERSTELLUNG EINES INDIVIDUELLEN, PATIENTENDATEN-BASIERTEN, MODULAR AUFGEBAUTEN FUSSSOHLEN-LEISTENS SOWIE ZUR ERMITTLUNG DER MATERIALIEN UND DES AUFBAUES EINER INDIVIDUELLEN, PATIENTENDATEN-BASIERTEN EINLEGE-SOHLE**
METHOD FOR PRODUCING AN INDIVIDUAL SOLE STRIP WHICH IS MODULAR AND WHICH IS BASED ON PATIENT INFORMATION AND DETERMINATION OF THE MATERIALS AND THE STRUCTURE OF AN INDIVIDUAL INNER SOLE WHICH IS BASED ON PATIENT INFORMATION
PROCÉDÉ PERMETTANT LA PRODUCTION D'UNE FORME INDIVIDUELLE POUR SEMELLE, DOTÉE D'UNE STRUCTURE MODULAIRE ET BASÉE SUR DES DONNÉES PATIENT, ET LA DÉTERMINATION DES MATÉRIAUX ET DE LA STRUCTURE D'UNE SEMELLE INTÉRIEURE INDIVIDUELLE BASÉE SUR DES DONNÉES PATIENT

(30) Priorität: 11.09.2012 DE 102012017882
(43) Veröffentlichungstag der Anmeldung: 04.11.2015
(73) Patentinhaber: Langmeier, Fatmir, 83064 Raubling (DE)
(72) Erfinder: Langmeier, Fatmir, 83064 Raubling (DE)
(86) Internationale Anmeldenummer: PCT/DE2013/000505
(87) Internationale Veröffentlichungsnummer: WO 2014/040581

(56) Entgegenhaltungen:
- WO-A1-2004/073441
- DE-C- 205 610
- DE-U1-202012 008 676
- GB-A- 2 225 210

## Beschreibung

Die vorliegende Erfindung betrifft ein Verfahren zur patientendaten-basierten Auswahl von zonenspezifischen Modulen eines modular aufgebauten, in mehrere Zonen unterteilten Fußsohlen-Leistens und/oder oder zur patientendaten-basierten Ermittlung der Materialien und des Aufbaues der auf dem Fußsohlen-Leisten durch Einwirkung von Wärme und Vakuum-Verpressung zu formenden Einlege-Sohle, mit den in dem Oberbegriff des Patentanspruches 1 angegebenen Merkmalen.

Aus dem Stand der Technik ist es - im Rahmen der sogenannten "Schubladen-Technik"- zur Bereitstellung von Einlegesohlen bekannt, den Patienten oder Sportler in eine Trittschaum-Box treten zu lassen, wobei sich der Trittschaum unter Anpassung an die Form des Sohlenbereiches des Patienten oder Sportlers zusammentritt und verformt.
Anschließend wird der Fußsohlen-Abdruck in dem Trittschaum mit Gips oder Polyurethan-Schaum ausgefüllt und das aus der Trittschaum-Form herausgenommene Fußsohlen-Positiv aus Gips oder Polyurethan-Schaum modelliert. In der Regel wählt der eine Einlege-Sohle Verkaufende dann aus den bei ihm vorrätigen Fertig-Einlege-Sohlen eine der Größe des Gips- oder Polyurethanschaum-Abdruckes entsprechende Fertig-Einlege-Sohle aus und verkauft diese an den um eine Einlege-Sohle nachsuchenden Patienten beziehungsweise Sportler.

Diese als "Schubladen-Technik" bekannte und heute sehr weit verbreitete Vorgehensweise zur Bereitstellung einer Fertig-Einlege-Sohle ist insbesondere deswegen nachteilig, weil die mit ihrer Hilfe aus dem gerade vorrätigen Fundus des Einlege-Sohlen-Verkäufers ausgewählte Fertig-Einlege-Sohle nicht an die individuellen Bedürfnisse des Patienten oder Sportlers patientendaten-spezifisch angepasst ist. Die Reklamationsquote ist bei diesen nach der "Schubladen-Technik" bereitgestellten Fertig-Einlege-Sohlen daher sehr hoch.

Aus dem Stand der Technik ist es darüber hinaus bekannt, mittels einer bei dem Einlege-Sohlen-Hersteller stehenden CNC-Fräse einen individualisierten Sohlen-Leisten herzustellen und unter Verwendung dieses individualisierten Sohlen-Leistens Einlege-Sohlen aus thermoplastischem Material zu erstellen.
Der Einsatz einer bei jedem Einlege-Sohlen-Hersteller stehenden CNC-Fräse ist in vielerlei Hinsicht nachteilig:
So sind die Anschaffungskosten für eine CNC-Fräse sehr hoch und vereiteln dadurch oftmals einen wirtschaftlich sinnvollen Einsatz. Des weiteren erfordert die Bedienung und Wartung einer CNC-Fräse an CNC-Fräsen ausgebildetes Fachpersonal, welches häufig - gerade in entlegenen Gebieten - nicht zur Verfügung steht und - sofern vorhanden - den Einsatz hoher Personalkosten erfordert.
Ein weiterer Nachteil von CNC-Fräsen ist darin zu sehen, dass sie für die Fräsung eines Sohlen-Leistens einen langen Zeitraum (etwa 15 Minuten) benötigen.
Der Einsatz von CNC-Fräsen ist auch wegen der großen anfallenden Abfallmenge nachteilig, da dort der Sohle-Leisten aus einem massiven Materialblock herausgefräst wird und der den Sohlen-Leisten überragende Material-Überstand als abgefräster Abfall anfällt.

DE 205 610 C offenbart ein Verfahren, die für das Verfahren von Ansprüche 1, 12, 13 als Grundlage dient.

Aufgabe der vorliegenden Erfindung ist daher die Bereitstellung eines Verfahrens, welches jederzeit vor Ort in einer Verkaufsstelle die Anfertigung von individualisierten, exakt die persönlichen Daten eines Patienten oder Sportlers berücksichtigenden Einlege-Sohlen gestattet und dadurch eine besonders niedrige Reklamationsquote der hergestellten Einlege-Sohlen bewirkt, welches das Vorhandensein einer CNC-Fräse vor Ort an der Verkaufsstelle selbst für extrem individualisierte Einlege-Sohlen überflüssig macht und dadurch hohe Anschaffungskosten, Betriebskosten, Wartungskosten und Kosten für Fach-Personal vermeidet, welches die Herstellung sogar von extrem individualisierten Einlege-Sohlen in sehr kurzer Zeit (zwei bis fünf Minuten pro Einlege-Sohle) auch einer orthopädisch nicht ausgebildeten Person gestattet und welches ein vom CNC-Fräsen gefürchtetes, durch abgefräste Überstände bedingtes Abfall-Problem ausschließt.

Erfindungsgemäß wird diese Aufgabe durch ein gattungsgemäßes Verfahren mit den Merkmalen des Patentanspruches 1 gelöst. Besonders bevorzugte Weiterbildungen des Verfahrens sind Gegenstand der Unteransprüche.

Ausführungsbeispiele der Erfindung werden anhand der Zeichnungen näher beschrieben. Es zeigen:

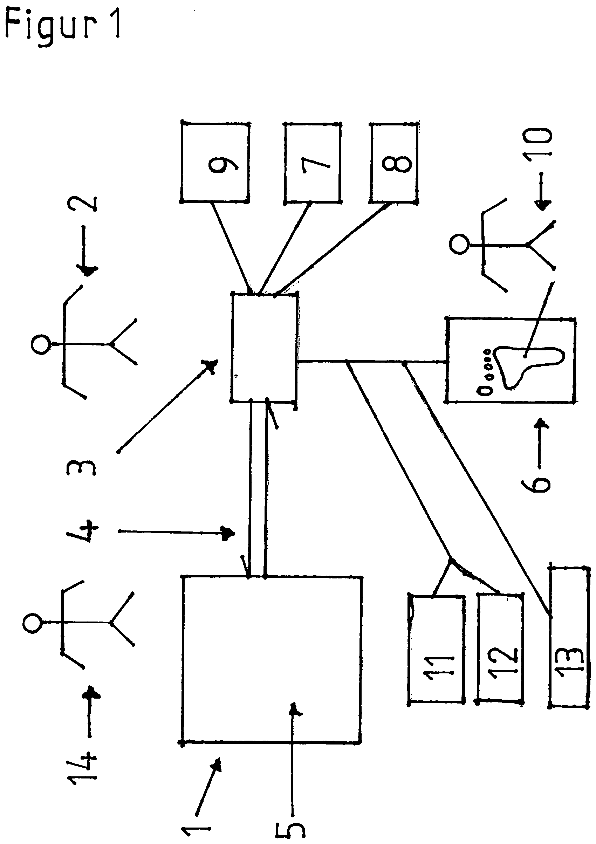

Figur 1 ein Schema des Ablaufs einer erfindungsgemäßen Zusammenstellung eines geeigneten individuellen Fußsohlen-Leistens (15);

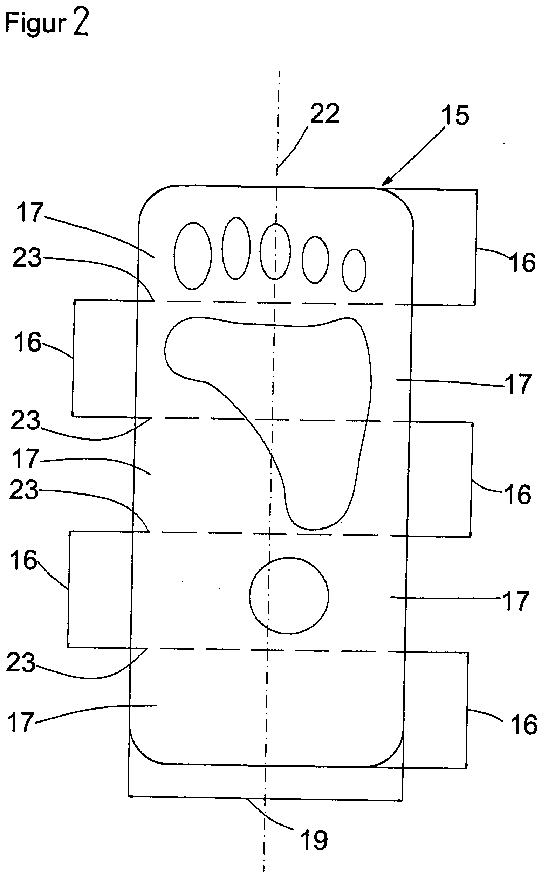

Figur 2 einen erfindungsgemäß erstellten, individuellen Fußsohlen-Leisten (15);

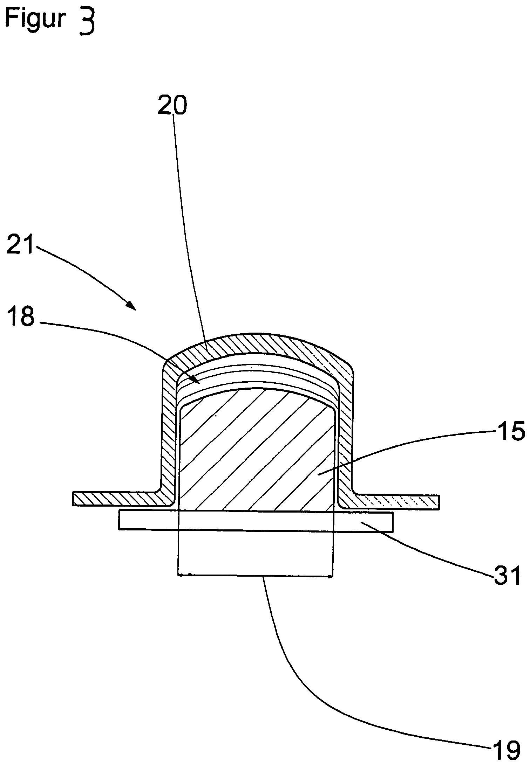

Figur 3 eine schematische Erstellung einer individuellen, patientendatenspezifischen Einlege-Sohle (18) durch Vakuum-Anpressung von Schichten einer thermoplastisch verformbaren Einlege-Sohle (18) an einen individuellen Fußsohlen-Leisten (15).

Auf einem zentralen Server (1) - oder auf den Rechnern (3) vor Ort - sind Daten und Programme (5) zur Durchführung des erfindungsgemäßen Verfahrens installiert. Die Benutzer (2) [= Orthopädie-Schuhtechniker, Orthopädie-Techniker, Pedologen, Physiotherapeuten, Ärzte, Orthopäden] des erfindungsgemäßen Verfahrens (5) können sich an beliebigen Orten befinden und sind gegebenenfalls mit ihren Benutzer-Rechnern (3) über eine beliebige Datenverbindung (4) mit dem zentralen Server (1) verbunden oder verfügen auf ihren Rechnern (3) vor Ort über die erforderlichen Daten und Programme (5) zur Durchführung des erfindungsgemäßen Verfahrens.

In den zentralen Server (1) oder in die Benutzer-Rechner (3) wird - entweder von dem Server-Betreiber (14) oder von dem Benutzer (2) des erfindungsgemäßen Verfahrens oder von einer Fußsohlen-Leisten-Module-Baukasten-Herstellungsmaschine - eingegeben, welche früher hergestellten FußsohlenLeisten-Module (17) bei dem an beliebigem Ort ansässigen Benutzer (2) tatsächlich vorhanden sind.

Es werden zentral schuhgrößenabhängig in drei bis zehn der Fuß-Länge nach hintereinander vorgesehene Zonen (16) unterteilte, modulartig aufgebaute Fußsohlen-Leisten (15) für die Lieferung an die Benutzer (2) hergestellt. Für jede Zone (16) des Fußsohlen-Leistens (15) werden ein bis sechs unterschiedlich geformte, an ihrer Oberseite mit Vertiefungen und/oder Erhöhungen versehene Standard-Module (17) an den Benutzer (2) in Form eines Modul-Baukastens geliefert.

In der Regel erstreckt sich die Gesamt-Breite jedes Standard-Modules (17) über die gesamte Breite (19) des Fußsohlen-Leistens (15).

Alternativ hierzu können pro Zone (16) des Fußsohlen-Leistens (15) - anstelle eines einzigen Modules (17) - zwei oder mehrere, nebeneinander vorgesehene Module (17) zum Einsatz kommen.

Ein wesentliches Merkmal des in einer separaten, gleichzeitigen Patentanmeldung des gleichen Anmelders beschriebenen, mit dem erfindungsgemäßen Verfahren hergestellten Fußsohlen-Leistens (15) besteht darin, dass die Übergänge zwischen zwei benachbarten Zonen (16) des Fußsohlen-Leistens (15) jeweils glatt und stufenlos kontinuierlich ausgebildet sind, obwohl die zu einer bestimmten Zone (16) gehörenden Module (17) jeweils unterschiedliche, orthopädisch sinnvolle Erhebungen und/oder Vertiefungen aufweisen.

Dies bedeutet: Für die Zusammenstellung eines patientenspezifischen, modulartig aufgebauten Sohlen-Leistens (15) bekommt der Benutzer (2) vor Ort von einem zentralen Server (1) oder von seinem vor Ort befindlichen Rechner (3) lediglich die Angabe, welches Modul (17) (z.B. Modul 3 von insgesamt 5 für die jeweilige Zone (16) in Frage kommenden Modulen) er aus dem bei ihm vorhandenen Modul-Baukasten auszuwählen und hintereinander und/oder nebeneinander anzuordnen hat. Jeder bei dem Benutzer (2) vor Ort vorhandene Modul-Baukasten enthält 1 bis 10 Standard-Module (17) pro Zone (16) des zu erstellenden Fußsohlen-Leistens (15), wobei der Fußsohlen-Leisten (15) 3 bis 15 entlang der Längsachse des Fußsohlen-Leistens (15) hintereinander liegende und lückenlos und stufenlos aneinander anschließende Zonen (16) umfassen kann.

Diese Angabe eines oder mehrerer ganz bestimmter Module (17) pro Zone (16) soll von dem erfindungsgemäßen Verfahren (5) auf der Basis patientenspezifischer Daten bestimmt und an den Benutzer vor Ort - beispielsweise via Internet (4) - per Bildschirm (8) und/oder Drucker (7) mitgeteilt werden.

Darüber hinaus kann das erfindungsgemäße Verfahren dem Benutzer (2) mitteilen, welches Material mit welchen Eigenschaften (dämpfend und elastisch, weich oder hart) und in welchem Bereich des Sohlen-Leistens (15) er zur Herstellung der Einlege-Sohle (18) verwenden und mit Hilfe des vorbeschriebenen Sohlen-Leistens (15) thermoplastisch formen soll (thermische Vakuumverpressung).

Die Rechner (3) der Benutzer vor Ort können jeweils mit einer am Ort des Benutzers (2) befindlichen pedobarographischen Druckmess-Platte (6) und/oder mit einem pedobarographischen Druckmess-Laufband (11) und/oder mit einer pedobarographischen Innenschuh-Druckmess-Sohle (12) und in allen 3 Fällen (6, 11, 12) - allerdings nur gegebenenfalls - zusätzlich mit einem sogenannten Rücken-Scanner (13), aber stets auch mit einem Drucker (7) und/oder mit einem Bildschirm (8) und mit einer Tastatur (9) in Verbindung stehen.

Zunächst werden in der Regel folgende Daten des um eine Einlege-Sohle (18) nachsuchenden Patienten (10) oder Sportlers (10) von dem Benutzer (2) vor Ort in seinen Rechner (3) eingegeben und beispielsweise per Internet (4) an den zentralen Server (1) übermittelt:
1. Anamnese-Daten (gehört zu "medizinischen Befunden" im Rahmen der vorliegenden Erfindung; z.B. Vorliegen eines Plattfusses, Knickfusses, Hohlfußes, Spreizfußes, Fersenspornes, von Hammerzehen, Diagnosen wie Diabetes etc.; Beurteilung des Gangbildes; Anamnese-Daten stammen beispielsweise aus Untersuchung des Benutzers (2) vor Ort, Angaben des Patienten, Verordnung eines Arztes).
2. weitere Patienten-Daten [gehört zu "medizinischen Befunden" im Rahmen der vorliegenden Erfindung; Patient = späterer Einlege-Sohlen-Träger; Beispiele für "weitere Patientendaten": Alter, Geschlecht (weiblich: häufiger Bindegewebsschwäche), Gewicht, Schuhgröße, Aktivitätsgrad (Sportart, zum Beispiel: Laufsport, Golfsport, Tanzsport), Schuhtyp, in welchen später die Einlege-Sohle (18) eingesetzt werden soll (zum Beispiel: Laufschuh, Wanderschuh, Arbeitsschuh, Therapieschuh, Straßenschuh)].
3. Ergebnisse eines Bewegungs-Checks des Patienten (10) oder Sportlers (10) [gehört zu "medizinischen Befunden" im Rahmen der vorliegenden Erfindung; zum Beispiel: Muskelverkürzungen des Bewegungsapparates, insbesondere: Verkürzung des: Iliopsoas (Hüftbeuge-Muskel), Quadriceps (Oberschenkel-Muskel), Gastrocnemius (Waden-Muskel), Soleus (unterer Waden-Muskel), Fuß-Muskulatur: insbesondere Verkürzung der Plantar-Faszie].
4. Ergebnisse eine Fuß-Palpation [= Durchkneten des Fußes; gehört zu "medizinischen Befunden" im Rahmen der vorliegenden Erfindung; Bestimmung des Beweglichkeits-Grades des Fußes = Bestimmung eines Zahlenwertes auf einer Skala, Vorliegen einer Kontraktion]

Über die pedobarographische Druckmessplatte (6) und/oder über ein pedobarograhisches Druckmess-Laufband (11) und/oder über eine pedobarographische Innenschuh-Druckmess-Sohle (12) - gegebenenfalls in Kombination mit einem Rücken-Scanner (13) - werden dann folgende Daten (=Messwerte) des um eine Einlege-Sohle (18) nachsuchenden Patienten (10) oder Sportlers (10) in den Benutzer-Rechner (3) eingelesen und beispielsweise via Internet (4) an den zentralen Server (1) übermittelt:
1. Werte einer statischen pedobarographischen Druckmessung [= Postural-Messung: zur Beurteilung des Haltungs-Typs (ideal: Schwerpunkt liegt - in einer Draufsicht - im Mittenbereich zwischen Zehen und Fersen; Abweichungen: Schwerpunkt kann vor oder hinter Mittenbereich liegen = nicht normale Krümmung der Wirbelsäule zum Ausgleich und zur Verhinderung eines Kippens des Patienten (10) dann erforderlich, kann mit Einlegesohlen (18) zumindest teilweise ausgeglichen werden].
   Über eine pedobarographische Druckmessplatte (6) und/oder über ein pedobarographisches Druckmess-Laufband (11) und/oder über eine pedobarographische Innenschuh-Druckmess-Sohle (12) - gegebenenfalls in Kombination mit einem Rücken-Scanner (13) - werden dann folgende Daten (= Messwerte) des um eine Einlege-Sohle nachsuchenden Patienten (10) oder Sportlers (10) in den Benutzer-Rechner (3) eingelesen und per Internet (4) an den zentralen Server (1) übermittelt:
2. Werte einer dynamischen pedobarographischen Druckmessung [= Druckmessung bei Auftritt mit Ferse, Abrollen des Fußes, Abstoßen mit Ballen und Zehen). Geschwindigkeit (Störung: wenn nicht kontinuierlich gleiche Geschwindigkeit über gesamten Abrollweg, sondern lokale Verzögerungen) der Schwerpunktverlagerung von Ferse nach vorn in Richtung der Zehen und Bahn-Form (Störung: wenn keine kontinuierlich-glatte Schwerpunkt-Verlagerungs-Linie, sondern seitliche Ausbuchtungen in dieser Linie) der Wanderung des Schwerpunktes. Dies gibt Aufschluss über eventuell vorliegende dynamische Störungen.

Der Weg des Personen-Schwerpunktes von Auftritt bis Abstoßen "über Grund" heißt "Gangabtragungslinie". Deren Entstehungs-Geschwindigkeit und Verlaufs-Form werden mit der dynamischen Druckmessung bestimmt.

Mittels des erfindungsgemäßen Verfahrens werden aus den in den Rechner (3) des Benutzers (2) eingegebenen, weiter oben näher beschriebenen patientenspezifischen Daten (Punkte 1. und 2.) und - gegebenenfalls aus einer hierzu gehörenden bewegungsapparatbezogenen Norm-Statik - die Raumkoordinaten eines idealen Fußsohlen-Leistens (15) als Soll-Wert bestimmt. Alternativ hierzu können größenabhängige Norm-Fußsohlen-Leisten-Raumkoordinaten und - gegebenenfalls eine hierzu gehörende Norm-Statik-als Soll-Werte auf dem Server (1) hinterlegt sein.

Anhand der in den Rechner (3) des Benutzers (2) eingegebenen Werte (Punkte 1. bis 4.) und der dort eingelesenen Druckmessungs-Daten (Punkte 1. und 2.) kann das erfindungsgemäße Verfahren ferner die tatsächlichen Raumkoordinaten des Fußbettes des Patienten (10) als Ist-Wert ermitteln.

Das Verfahren setzt nun diese Soll-Werte und Ist-Werte miteinander in Beziehung und bestimmt daraus einen einlagespezifischen, patientenbezogenen Korrektur-Wert.

Da das Verfahren feststellt, welche Module [(17); z.B. Module Nr. 3, 8, 12 und 18 bei einem beispielsweise 4-zonigen Fußsohlen-Leisten (15)] des anzufertigenden Fußsohlen-Leistens (15) in dem Modul-Baukasten des Benutzers (2) vorhanden sind, kann das Verfahren bei Kenntnis des Korrektur-Wertes dem Benutzer (2) mitteilen, welches Modul (17) er pro Zone (16) des von dem Benutzer (2) anzufertigenden Fußsohlen-Leistens (15) auszuwählen und zu verwenden hat, indem es dasjenige Modul (17) auswählt und benennt, welches dem jeweiligen zonenspezifischen Korrekturwert am besten oder - günstigstenfalls - vollständig entspricht.

In der Auswahl und der Mitteilung der unter orthopädischen Gesichtspunkten jeweils geeigneten Standard-Module (17) für die einzelnen Zonen (16) des Fußsohlen-Leistens (15) besteht eines der wesentlichsten Vorteile des erfindungsgemäßen Verfahrens.

Ein weiterer wesentlicher Vorteil des erfindungsgemäßen Verfahrens besteht darin, dass es anhand des Korrektur-Wertes dem Benutzer (2) mitteilt, welches thermoplastische Material und welchen Aufbau bzw. Material-Reihenfolge und örtliche Material-Anordnung auf dem individuellen Fußsohlen-Leisten (15) er zur Herstellung der Einlege-Sohle (18) zu verwenden beziehungsweise zu realisieren hat.
Der Verkäufer (2) vor Ort muss dann nur noch das von dem Verfahren pro Zone (16) angegebene Standard-Modul (17) aus dem bei ihm vorhandenen Modul-Baukasten entnehmen und die angegebenen Standard-Module (17) zonenbezogen hintereinander und/oder nebeneinander anordnen, um einen die Patienten-Bedürfnisse in besonders ausgeprägter Art und Weise berücksichtigenden, absolut individuellen Fußsohlen-Leisten (15) zu erhalten.

Anschließend an das Herausnehmen aus dem Modul-Baukasten und zonenbezogene Anordnen der vom Verfahren angegebenen Standard-Module (17) - oder währenddessen - heizt der Benutzer (2) die von dem Verfahren ebenfalls angegebenen thermoplastischen Materialien zur Herstellung der Einlege-Sohle (18) auf, wobei er auf die von dem Verfahren vorgegebene Art, Reihenfolge und Anordnung (Platzierung) der Materialien zu achten hat.

Die erwärmten Material-Schichten werden dann auf den modular aufgebauten Fußsohlen-Leisten (15) - in seiner Funktion als Formgeber - aufgelegt und mit dem flexiblen Deckel (20) einer Vakuumpresse (21) abgedeckt. Wird dann zwischen der Unterseite des flexiblen Deckels (20) der Vakuumpresse (21) einerseits und dem modular aufgebauten Fußsohlen-Leisten (15) andererseits ein Unterdruck angelegt, passt sich die Form des flexiblen Deckels (20) an die Form des modular aufgebauten Fußsohlen-Leistens (15) anschmiegend an und formt hierbei das dazwischen angeordnete thermoplastische Einlegesohlen-Material exakt den Konturen der Oberseite des Fußsohlen-Leistens (15) entsprechend zur fertigen, extrem individualisierten Einlege-Sohle (18).

Die Anfertigung einer extrem individualisierten Einlege-Sohle (18) kann dank des Einsatzes des erfindungsgemäßen Verfahrens demnach in einer besonders kurzen Zeit (etwa 2 bis 5 Minuten) - unter Verzicht auf den Einsatz von Fachpersonal und einer CNC-Fräsmaschine am Ort des Benutzers (2)-hergestellt werden.
Bei der anzufertigenden Einlege-Sohle (18) kann es sich beispielsweise um eine orthopädische Einlege-Sohle, eine Therapie-Einlege-Sohle oder um ein Sport-Einlege-Sohle handeln.

Gegenstand der vorliegenden Erfindung ist auch ein Verfahren zur Herstellung einer individuellen, patientendaten-basierten Einlegesohle (18), bei welchem dem Benutzer (2) - beispielsweise auf seinem Bildschirm -angegeben wird, welches thermoplastische Material und welchen Aufbau beziehungsweise welche Material-Reihenfolge und örtliche Material-Anordnung er auf einem oben näher beschriebenen, modular aufgebauten Fußsohlen-Leisten (15) anzuordnen hat, um die patientendaten-basierte Einlegesohle (18) herzustellen.

Insbesondere ist Gegenstand der vorliegenden Erfindung ferner ein Verfahren zur Herstellung einer individuellen, patientendaten-basierten Einlegesohle (18), bei dem die thermoplastischen Materialien erwärmt, auf einem oben näher beschriebenen, modular aufgebauten Fußsohlenleisten (15) angeordnet und mit dem flexiblen Deckel (20) einer Vakuumpresse (21) abgedeckt werden.

Anschließend wird zwischen der Unterseite des flexiblen Deckels (20) der Vakuumpresse (21) und dem Fußsohlen-Leisten (15) ein Unterdruck angelegt, so dass sich die Form des flexiblen Deckels (20) an die Form des Fußsohlen-Leistens (15) anpasst und dass sich die thermoplastischen Materialien dabei exakt an die Konturen der Oberseite des Fußsohlen-Leistens (15) anpassen und nach dem Abkühlen die Einlegesohle (18) bilden.

Zusammenfassend ist festzustellen, dass im Rahmen der vorliegenden Erfindung ein Verfahren bereitgestellt wird, welches - jederzeit und an jedem Ort - die Anfertigung von individualisierten, exakt die persönlichen Daten eines Patienten (10) oder Sportlers berücksichtigenden Einlege-Sohlen (18) gestattet und dadurch eine besonders niedrige Reklamationsquote der hergestellten Einlege-Sohlen (18) bewirkt.

Ein besonderer Vorteil des erfindungsgemäßen Verfahrens ist ferner darin zu sehen, dass es das Vorhandensein einer CNC-Fräse in einer Verkaufsstelle selbst für extrem individualisierte Einlege-Sohlen nicht mehr erfordert und sogar überflüssig macht und dadurch hohe Anschaffungskosten, Betriebskosten, Wartungskosten und Kosten für Fach-Personal vermeidet.

Ein wesentlicher Vorteil des erfindungsgemäßen Verfahrens besteht darin, dass es die Herstellung sogar von extrem individualisierten Einlege-Sohlen (18) in sehr kurzer Zeit [zwei bis fünf Minuten pro Einlege-Sohle (18)] auch einer orthopädisch nicht ausgebildeten Person gestattet.

Das erfindungsgemäße Verfahren ist schließlich auch deswegen vorteilhaft, weil es das von CNC-Fräsen gefürchtete, durch abgefräste Überstände bedingte Abfall-Problem sicher ausschließt.

Die vorliegende Erfindung betrifft also ein Verfahren zur Herstellung eines individuellen Fußsohlen-Leistens (15) für einen Patienten (10) oder Sportler anhand von Messwerten und/oder von medizinischen Befunden, die von dem Körper des Patienten (10) oder Sportlers gewonnen werden.

In der Regel wird der individuelle Fußsohlen-Leisten (15) aus einzelnen, vorgefertigten Standard-Modulen (17) aufgebaut, wobei die Standard-Module (17) aus einem Module-Baukasten ausgewählt werden.

Für diese Auswahl der Standard-Module (17) kann im Rahmen des erfindungsgemäßen Verfahrens anhand der Messwerte und/oder medizinischen Befunde, die vom Körper des Patienten (10) oder Sportlers gewonnen werden, ein Ist-Wert für die Fußform bestimmt werden.
Bei dem erfindungsgemäßen Verfahren wird dann dieser Ist-Wert für die Fußform mit einem oder mit mehreren vorgegebenen Soll-Werten verglichen.

Anhand des Vergleichsergebnisses und der Kenntnis der im Module-Baukasten vor Ort tatsächlich vorhandenen Standard-Module (17) werden dann diejenigen Standard-Module (17) ausgewählt und in ihrer Reihenfolge zusammengestellt - oder in ihrer Reihenfolge angegeben -, die dem anhand des Vergleiches von Ist- und Sollwert ermittelten idealen individuellen Fußsohlen-Leisten (15) am nächsten kommen.

Ein besonderer Vorteil des erfindungsgemäßen Verfahrens besteht darin, dass zusätzlich zu den Messwerten medizinische Befunde des Patienten (10) oder Sportlers - zur Bestimmung der Standard-Module (17) für den individuellen Fußsohlen-Leisten (15) und zur Bestimmung der Materialwahl und des Aufbaues der an den Fußsohlen-Leisten (15) anzuformenden Einlegesohle (18) - herangezogen werden können.

Nach dem erfindungsgemäßen Verfahren wird jeder individuelle FußsohlenLeisten (15) schuhgrößenabhängig aus drei bis zehn der Fußlänge nach hintereinander angeordneten Standard-Modulen (17) zusammengesetzt.

In besonders bevorzugten Ausführungsformen des erfindungsgemäßen Verfahrens wird also jeder individuelle Fußsohlen-Leisten (15) schuhgrößenabhängig aus Standard-Modulen (17) zusammengesetzt, welche in Zonen (16) des Fußsohlen-Leistens (15) hintereinander anordenbar sind, wobei in jeder Zone (16) des Fußsohlen-Leistens (15) ein oder mehrere Module (17) gegebenenfalls nebeneinander vorsehbar sind.

Ein besonderer Vorteil des erfindungsgemäßen Verfahrens besteht darin, dass abhängig von den Messwerten und/oder den medizinischen Befunden auch eine Auswahl des geeigneten Materials und der richtigen Materialeigenschaften der unter Einsatz des Fußsohlen-Leistens (15) zu verformenden Einlegesohle (18) erfolgen kann.

In der Regel werden die Messwerte mit einer oder mehreren pedobarographischen Druckmess-Platten (6) und/oder mit einem oder mehreren pedobarographischen Druckmess-Laufbändern (11) und/oder mit einer oder mehreren pedobarographischen Innenschuh-Druckmess-Sohlen (12) gewonnen.

Im Rahmen des erfindungsgemäßen Verfahrens können zusätzlich zu den Messwerten und/oder medizinischen Befunden auch Angaben über den Verwendungszweck der Einlegesohle (18) - zur Bestimmung der Module (17) für den individuellen Fußsohlen-Leisten (15) und zur Bestimmung der Materialwahl und des Aufbaues der Einlegesohle (18) - herangezogen werden.

In besonders bevorzugten Ausführungsformen des erfindungsgemäßen Verfahrens können zusätzlich zu den Messwerten und/oder medizinischen Befunden auch Ergebnisse einer Fuß-Palpation - zur Bestimmung der Module (17) für den individuellen Fußsohlen-Leisten (15) und zur Bestimmung der Materialwahl und des Aufbaues der Einlegesohle (18) - herangezogen werden.

In der Regel werden die Messwerte mittels einer statischen pedobarographischen Druckmessung - zur Bestimmung der Module (17) für den individuellen Fußsohlen-Leisten (15) und zur Bestimmung der Materialwahl und des Aufbaues der Einlegesohle (18) - bestimmt.

Alternativ oder zusätzlich hierzu können die Messwerte mittels einer dynamischen pedobarographischen Druckmessung - zur Bestimmung der Module (17) für den individuellen Fußsohlen-Leisten (15) und zur Bestimmung der Materialwahl und des Aufbaues der Einlegesohle (18) - bestimmt werden.

Als unmittelbares Verfahrenserzeugnis ist auch der nach dem erfindungsgemäßen Verfahren hergestellte, modular aufgebaute und nach Patientendaten individualisierbare Fußsohlen-Leisten (15) Gegenstand der vorliegenden Patentanmeldung.

## Patentansprüche

1. Verfahren zur Herstellung eines individuellen Fußsohlen-Leistens (15) für einen Patienten (10) oder Sportler anhand von Messwerten und/oder von medizinischen Befunden, die von dem Körper des Patienten (10) oder Sportlers gewonnen werden, **dadurch gekennzeichnet, dass** der individuelle Fußsohlen-Leisten (15) aus einzelnen, vorgefertigten Standard-Modulen (17) aufgebaut wird, wobei die Standard-Module (17) aus einem Module-Baukasten ausgewählt werden, indem anhand der Messwerte und/oder medizinischen Befunde, die vom Körper des Patienten (10) oder Sportlers gewonnen werden, ein Ist-Wert für die Fußform bestimmt wird und dieser mit einem oder mehreren vorgegebenen Soll-Werten verglichen wird und anhand des Vergleichsergebnisses und der Kenntnis der im Module-Baukasten vorhandenen Standard-Module (17) diejenigen Standard-Module (17) ausgewählt und in ihrer Reihenfolge hintereinanderliegend zusammengestelltoder in ihrer Reihenfolge hintereinanderliegend angegeben - werden, die dem anhand des Vergleiches von Ist- und Sollwert ermittelten idealen individuellen Fußsohlen-Leisten (15) am nächsten kommen.

2. Verfahren nach Anspruch 1, **dadurch gekennzeichnet, dass** zusätzlich zu den Messwerten medizinische Befunde des Patienten (10) oder Sportlers - zur Bestimmung der Standard-Module (17) für den individuellen FußsohlenLeisten (15) und zur Bestimmung der Materialwahl und des Aufbaues der an den Fußsohlen-Leisten (15) anzuformenden Einlegesohle (18) - herangezogen werden.

3. Verfahren nach einem der vorhergehenden Ansprüche, **dadurch gekennzeichnet, dass** jeder individuelle Fußsohlen-Leisten (15) schuhgrößenabhängig aus drei bis zehn der Fußlänge nach hintereinander angeordneten Standard-Modulen (17) zusammengesetzt wird.

4. Verfahren nach einem der vorhergehenden Ansprüche, **dadurch gekennzeichnet, dass** jeder individuelle Fußsohlen-Leisten (15) schuhgrößenabhängig aus Standard-Modulen (17) zusammengesetzt wird, welche in Zonen (16) des Fußsohlen-Leistens (15) hintereinander anordenbar sind, wobei in jeder Zone (16) des Fußsohlen-Leistens (15) ein oder mehrere Module (17) nebeneinander vorsehbar sind.

5. Verfahren nach einem der vorhergehenden Ansprüche, **dadurch gekennzeichnet, dass** abhängig von den Messwerten und/oder den medizinischen Befunden auch eine Auswahl des geeigneten Materials und der richtigen Materialeigenschaften der unter Einsatz des Fußsohlen-Leistens (15) zu verformenden Einlegesohle (18) erfolgt.

6. Verfahren nach einem der vorhergehenden Ansprüche, **dadurch gekennzeichnet, dass** die Messwerte mit einer oder mehreren pedobarographischen Druckmess-Platten (6) und/oder mit einem oder mehreren pedobarographischen Druckmess-Laufbändern (11) und/oder mit einer oder mehreren pedobarographischen Innenschuh-Druckmess-Sohlen (12) gewonnen werden.

7. Verfahren nach einem der vorhergehenden Ansprüche, **dadurch gekennzeichnet, dass** zusätzlich zu den Messwerten und/oder medizinischen Befunden auch Angaben über den Verwendungszweck der Einlegesohle (18) - zur Bestimmung der Module (17) für den individuellen Fußsohlen-Leisten (15) und zur Bestimmung der Materialwahl und des Aufbaues der Einlegesohle (18) - herangezogen werden.

8. Verfahren nach einem der vorhergehenden Ansprüche, **dadurch gekennzeichnet, dass** zusätzliche zu den Messwerten und/oder medizinischen Befunden auch Ergebnisse einer Fuß-Palpation - zur Bestimmung der Module (17) für den individuellen Fußsohlen-Leisten (15) und zur Bestimmung der Materialwahl und des Aufbaues der Einlegesohle (18) - herangezogen werden.

9. Verfahren nach einem der vorhergehenden Ansprüche, **dadurch gekennzeichnet, dass** die Messwerte mittels einer statischen pedobarographischen Druckmessung - zur Bestimmung der Module (17) für den individuellen Fußsohlen-Leisten (15) und zur Bestimmung der Materialwahl und des Aufbaues der Einlegesohle (18) - bestimmt werden.

10. Verfahren nach einem der vorhergehenden Ansprüche, **dadurch gekennzeichnet, dass** die Messwerte mittels einer dynamischen pedobarographischen Druckmessung - zur Bestimmung der Module (17) für den individuellen Fußsohlen-Leisten (15) und zur Bestimmung der Materialwahl und des Aufbaues der Einlegesohle (18) - bestimmt werden.

11. Fußsohlen-Leisten (15), **dadurch gekennzeichnet, dass** er modular aufgebaut und nach einem Verfahren nach einem der vorhergehenden Ansprüche erhältlich ist.

12. Verfahren zur Herstellung einer individuellen, patientendaten-basierten Einlegesohle (18), **dadurch gekennzeichnet, dass** dem Benutzer (2) angegeben wird, welches thermoplastische Material und welchen Aufbau beziehungsweise welche Material-Reihenfolge und örtliche Material-Anordnung er auf einem Fußsohlen-Leisten (15) gemäß einem der Ansprüche 1 bis 11 anzuordnen hat, um die patientendaten-basierte Einlegesohle (18) herzustellen.

13. Verfahren zur Herstellung einer individuellen, patientendaten-basierten Einlegesohle (18), **dadurch gekennzeichnet, dass** die thermoplastischen Materialien erwärmt, auf einem Fußsohlenleisten (15) gemäß einem der Ansprüche 1 bis 11 angeordnet und mit dem flexiblen Deckel (20) einer Vakuumpresse (21) abgedeckt werden und dass zwischen der Unterseite des flexiblen Deckels (20) der Vakuumpresse (21) und dem Fußsohlen-Leisten (15) ein Unterdruck angelegt wird, so dass sich die Form des flexiblen Deckels (20) an die Form des Fußsohlen-Leistens (15) anpasst und dass sich die thermoplastischen Materialien dabei exakt an die Konturen der Oberseite des Fußsohlen-Leistens (15) anpassen und nach dem Abkühlen die Einlegesohle (18) bilden.

## Claims

1. A method for producing an individual foot sole last (15) for a patient (10) or sportsman by reference to measured values and/or medical findings which are obtained from the body of the patient (10) or sportsman, **characterized in that** the individual foot sole last (15) is constructed of individual prefabricated standard modules (17), wherein the standard modules (17) are selected from a module set, whereby by reference to the measured values and/or medical findings which are obtained from the body of the patient (10) or sportsman, an actual value for the foot mould is determined and this is compared with one or more predefined desired values and by reference to the result of the comparison and the knowledge of the standard modules (17) present in the module set, those standard modules (17) are selected and combined in their sequence consecutively - or specified in their sequence consecutively - which come closest to the ideal individual foot sole last (15) determined by reference to the comparison of actual and desired value.

2. The method according to claim 1, **characterized in that** in addition to the measured values, medical findings of the patient (10) or sportsman are used to determine the standard modules (17) for the individual foot sole last (15) and to determine the choice of material and the structure of the insole (18) to be formed on the foot sole last (15).

3. The method according to any one of the preceding claims, **characterized in that** each individual foot sole last (15) is composed depending on shoe size of three to ten standard modules (17) arranged consecutively according to foot length.

4. The method according to any one of the preceding claims, **characterized in that** each individual foot sole last (15) is composed of standard modules (17) depending on shoe size, which can be arranged consecutively in zones (16) of the foot sole last (15), wherein one or more modules (17) can be provided adjacent to one another in each zone (16) of the foot sole last (15).

5. The method according to any one of the preceding claims, **characterized in that** depending on the measured values and/or the medical findings, a selection of the suitable material and the correct material properties of the insole (18) to be formed using the foot sole last (15) is made.

6. The method according to any one of the preceding claims, **characterized in that** the measured values are obtained with one or more pedobarographic pressure measuring plates (6) and/or one or more pedobarographic pressure measuring treadmills (11) and/or with one or more pedobarographic inner shoe pressure measuring soles (12).

7. The method according to any one of the preceding claims, **characterized in that** in addition to the measured values and/or medical findings, information on the intended usage of the insole (18) is also used to determine the modules (17) for the individual foot sole last (15) and to determine the choice of material and the structure of the insole (18).

8. The method according to any one of the preceding claims, **characterized in that** in addition to the measured values and/or medical findings, results of a foot palpation are also used to determine the modules (17) for the individual foot sole last (15) and to determine the choice of material and the structure of the insole (18).

9. The method according to any one of the preceding claims, **characterized in that** the measured values are obtained by means of a static pedobarographic pressure measurement to determine the modules (17) for the individual foot sole last (15) and to determine the choice of material and the structure of the insole (18).

10. The method according to any one of the preceding claims, **characterized in that** the measured values are obtained by means of a dynamic pedobarographic pressure measurement to determine the modules (17) for the individual foot sole last (15) and to determine the choice of material and the structure of the insole (18).

11. A foot sole last (15), **characterized in that** it has a modular structure and can be obtained according to a method according to any one of the preceding claims.

12. A method for manufacturing an individual patient-data-based insole (18), **characterized in that** it is specified to the user (2) which thermoplastic material and which structure or which material sequence and local material arrangement he has to arrange on the foot sole last (15) according to any one of claims 1 to 11, in order to produce the patient-data-based insole (18).

13. The method for manufacturing an individual patient-data-based insole (18), **characterized in that** the thermoplastic materials are heated, arranged on the foot sole last (15) according to any one of claims 1 to 11, and covered with a flexible cover (20) of a vacuum press (21) and that a negative pressure is applied between the underside of the flexible cover (20) of the vacuum press (21) and the foot sole last (15) so that the shape of the flexible cover (20) is adapted to the shape of the foot sole last (15) and that the thermoplastic materials adapt exactly to the contours of the upper side of the foot sole last (15) and after cooling, form the insole (18).

## Revendications

1. Procédé de fabrication d'une forme individuelle de semelle (15) pour un patient (10) ou sportif à partir de valeurs de mesure et/ou de diagnostics médicaux qui sont faits sur le corps du patient (10) ou du sportif, **caractérisé en ce que** la forme individuelle de semelle (15) est composée de modules standards distincts préfabriqués (17), les modules standards (17) étant sélectionnée dans un kit de construction modulaire en définissant une valeur réelle pour la forme du pied à partir des valeurs de mesure et/ou des diagnostics médicaux qui sont faits sur le corps du patient (10) ou du sportif et que celle-ci est comparée à une ou plusieurs valeurs théoriques prédéfinies et que, à partir du résultat de la comparaison et de la connaissance des modules standards (17) disponibles dans le kit de construction modulaire, sont sélectionnés et regroupés les uns derrière les autres dans leur ordre de succession - ou indiqués les uns derrière les autres dans leur ordre de succession - les modules standards (17) qui, à partir de la comparaison de la valeur théorique et réelle, se rapprochent le plus des formes individuelles idéales déterminées de semelles (15).

2. Procédé selon la revendication 1, **caractérisé en ce que**, en plus des valeurs de mesure, on a recours à des diagnostics médicaux du patient (10) ou du sportif pour déterminer les modules standards (17) pour la forme individuelle de semelle (15) et pour déterminer le choix du matériau et la structure de la semelle de garniture (18) à former sur la forme de semelle (15).

3. Procédé selon une des revendications précédentes, **caractérisé en ce que** chaque forme individuelle de semelle (15) est composée, en fonction de la pointure de la semelle, de trois à dix modules standards disposés successivement suivant la longueur du pied (17).

4. Procédé selon une des revendications précédentes, **caractérisé en ce que** chaque forme individuelle de semelle (15) est composée, en fonction de la pointure de la semelle, de modules standards (17) qui peuvent être disposés successivement dans des zones (16) de la forme de semelle (15), un ou plusieurs modules (17) pouvant être prévus juxtaposés dans chaque zone (16) de la forme de semelle (15).

5. Procédé selon une des revendications précédentes, **caractérisé en ce que**, en fonction des valeurs de mesure et/ou des diagnostics médicaux, il y a aussi une sélection du matériau adapté et des bonnes propriétés du matériau de la semelle de garniture (18) à déformer en utilisant la forme de semelle (15).

6. Procédé selon une des revendications précédentes, **caractérisé en ce que** les valeurs de mesure sont obtenues au moyen d'une plusieurs plaques de mesure de pression pédobarographiques (6) et/ou d'un ou plusieurs tapis de course de mesure de pression pédobarographiques (11) et/ou d'une ou plusieurs semelles de mesure de pression pédobarographiques intérieures à la chaussure (12).

7. Procédé selon une des revendications précédentes, **caractérisé en ce que**, en plus des valeurs de mesure et/ou des diagnostics médicaux, on a recours aussi à des indications sur la destination de la semelle de garniture (18) pour déterminer les modules (17) pour les formes individuelles de semelles (15) et pour déterminer la sélection du matériau et la structure de la semelle de garniture (18).

8. Procédé selon une des revendications précédentes, **caractérisé en ce que**, en plus des valeurs de mesure et/ou des diagnostics médicaux, on a recours aussi au résultat d'une palpation du pied pour déterminer les modules (17) pour la forme individuelle de semelle (15) et pour déterminer la sélection du matériau et la structure de la semelle de garniture (18).

9. Procédé selon une des revendications précédentes, **caractérisé en ce que** les valeurs de mesure sont déterminées au moyen d'une mesure de pression pédobarographique statique pour déterminer les modules (17) pour la forme individuelle de semelle (15) et pour déterminer la sélection du matériau et la structure de la semelle de garniture (18).

10. Procédé selon une des revendications précédentes, **caractérisé en ce que** les valeurs de mesure sont déterminées au moyen d'une mesure de pression pédobarographique dynamique pour déterminer les modules (17) pour la forme individuelle de semelle (15) et pour déterminer la sélection du matériau et la structure de la semelle de garniture (18).

11. Forme de semelle (15), **caractérisé en ce qu'**elle a une structure modulaire et peut être obtenue selon un procédé selon une des revendications précédentes.

12. Procédé de fabrication d'une semaine de garniture individuelle basée sur des données de patient (18), **caractérisé en ce qu'**il est indiqué à l'utilisateur (2) quel matériau thermoplastique et quelle structure ou quel ordre de succession de matériau et agencement local de matériau il doit disposer sur une forme de semelle (15) selon une des revendications 1 à 11 pour fabriquer la semelle de garniture (18) basée sur des données de patient.

13. Procédé de fabrication d'une semelle de garniture individuelle basée sur des données de patient (18), **caractérisé en ce que** les matériaux thermoplastiques sont chauffés, disposés sur une forme de Semelle (15) selon une des revendications 1 à 11 et couverts par le couvercle flexible (20) d'une presse à vide (21) et que, entre la face inférieure du couvercle flexible (20) de la presse à vide (21) et la forme de semelle (15), une dépression est appliquée, de sorte que la forme du couvercle flexible (20) s'adapte à la forme de la forme de semelle (15) et que les matériaux thermoplastiques s'adaptent alors exactement aux contours de la face supérieure de la forme de semelle (15) et constituent après refroidissement la semelle de garniture (18).
